# EUROPEAN PATENT APPLICATION

(11) **EP 4 804 610 A1**
(43) Date of publication of application: **09.09.2026**
(21) Application number: 24885616.3
(22) Date of filing: 25.10.2024
(51) Int. Cl.: H04W 28/16, H04W 84/12, H04W 92/20

(54) **COMMUNICATION DEVICE, COMMUNICATION METHOD, AND PROGRAM**

(30) Priority: 01.11.2023 JP 2023188039
(71) Applicant: Canon Kabushiki Kaisha, Tokyo 146-8501 (JP)
(72) Inventor: INOHIZA Hirohiko, Tokyo 146-8501 (JP); BARON Stephane, 35517 Cesson-Sevigne Cedex, Rennes-Atalante (FR); FUJIMORI Yuki, 35517 Cesson-Sevigne Cedex, Rennes-Atalante (FR)
(74) Representative: Canon Europe Limited
(86) International application number: PCT/JP2024/038118
(87) International publication number: WO 2025/094843

(57) **Abstract**

This access point is characterized by comprising: a controlling means that performs joint operation with another access point; and a transmitting means that wirelessly transmits a frame containing a preamble and a data field for the joint operation. The transmitting means transmits the frame including information about a Basic Service Set (BSS) color that is set for the access point and information about a BSS color that is set for the other access point in the preamble.

## Description

### Technical Field

The present invention relates to communication control technology for wireless LAN.

### Background Art

The development of communication technologies such as wireless local area network (LAN) is being pursued in response to increases in the amount of data being communicated in recent years. The Institute of Electrical and Electronics Engineers (IEEE) 802.11 standards series is known to be major communication standards for wireless LAN. The IEEE 802.11 standards series includes standards such as IEEE 802.11a/b/g/n/ac/ax/be (PTL 1).

For example, in the IEEE 802.11be standard, Multi-Link communication is being considered in which one access point (AP) establishes multiple links with one station (STA) via multiple different frequency channels to communicate in parallel. Note that two or more links may be selected from the same frequency band (any of the 2.4 GHz band, the 3.6 GHz band, the 4.9 and 5 GHz band, and the 6 GHz band) or from respectively different frequency bands. An AP and a STA supporting Multi-Link are referred to as an AP Multi-Link device (MLD) and a STA MLD.

Also, in the IEEE 802.11bn standard, which is the successor to the IEEE 802.11be standard, techniques for improving usability by using Multi AP communication are being considered.

An example is distributed MIMO technology, which is based on a technology referred to as multi-user multi-output (MIMO) in which multiple transmitting and receiving antennas are used at the same time and in the same channel. In distributed MIMO, in an environment where multiple APs and multiple STAs are present, groups are formed among APs to share information about communication states and the state of each AP, and data is sent from multiple APs to a STA in parallel at the same timing. Since the multiple APs can perform joint transmission to increase the number of spatial streams compared to the case of a single AP, an improvement in throughput is expected.

Another example is the technology referred to as joint beamforming. When an AP transmits data to a STA in a Basic Service Set (BSS), the AP uses an antenna pattern that has high antenna gain in the direction of the STA to which the data is to be transmitted, and low antenna gain in the direction of a STA in the BSS of another AP. Interference between BSSs can be reduced by configuring the antenna pattern, adjusting the transmit power, and performing scheduling on the basis of environmental information such as the locations of STAs across multiple APs.

Another example is the technology to improve reception quality at a STA by the effects of temporal and spatial diversity by having multiple APs transmit data to the STA at separate timings through time division.

Such communication technologies in which multiple APs form a group and operate jointly is referred to as Multi-AP communication, and APs are classified into a single Coordinator AP that manages all APs and a Coordinated AP that operates under the management of the Coordinator AP.

### Citation List

### Patent Literature

PTL 1: Japanese Patent Laid-Open No. 2018-50133

### Summary of Invention

### Technical Problem

IEEE 802.11ax and later standards define the use of information for identifying BSSs referred to as BSS color. If the device is an AP, the AP transmits a wireless frame in which the BSS color value of the BSS formed by the AP is set in a BSS color field of a PHY preamble. If the device is a STA, the STA transmits a wireless frame in which the BSS color value of the AP to which the STA is connected is set in the BSS color field of the PHY preamble. If a STA receives a wireless frame in which the BSS color field is set to the same value as the BSS color value of the AP to which the STA is connected, the STA treats and processes the wireless frame as an intra-BSS frame, but otherwise discards the wireless frame. On the other hand, IEEE 802.11bn does not clarify how the BSS color of a wireless frame is to be set when using Multi-AP communication as mentioned above.

The present invention is directed to providing a technique for appropriately performing configuration for multiple access points to jointly transmit wireless frames to a terminal.

### Solution to Problem

A communication device according to an aspect of the present invention carries out communication in compliance with an IEEE 802.11 standard. The communication device is characterized by comprising a constructing means for constructing a first Basic Service Set (BSS) and a transmitting means for operating jointly with a first other communication device to transmit a wireless frame to a second other communication device, wherein in a case of operating jointly with the first other communication device to transmit a wireless frame to the second other communication device, a value different from a BSS color value for the first BSS and different from a BSS color value for a second BSS constructed by the second other communication device is set in a BSS color field of the wireless frame.

### Advantageous Effects of Invention

According to the present invention, it is possible to provide a technique for appropriately performing configuration for multiple access points to jointly transmit wireless frames to a terminal.

### Brief Description of Drawings

[Fig. 1] Fig. 1 is a diagram illustrating an example of a configuration of a network in the present invention.
[Fig. 2] Fig. 2 is a diagram illustrating an example of a hardware configuration of a communication device in the present invention.
[Fig. 3] Fig. 3 is a diagram illustrating an example of a functional configuration of a communication device in the present invention.
[Fig. 4] Fig. 4 is a sequence diagram illustrating an example of processing by a communication device in the present invention.
[Fig. 5] Fig. 5 is a diagram illustrating an example of a wireless frame structure.
[Fig. 6] Fig. 6 is a flowchart illustrating a first example of processing by communication devices 102-104 in the present invention.
[Fig. 7] Fig. 7 is a flowchart illustrating a first example of processing by communication devices 105-107 in the present invention.
[Fig. 8] Fig. 8 is a flowchart illustrating a second example of processing by communication devices 102-104 in the present invention.
[Fig. 9] Fig. 9 is a flowchart illustrating a second example of processing by communication devices 105-107 in the present invention.

### Description of Embodiments

The following describes embodiments in detail with reference to the attached drawings. However, the following embodiments do not limit the invention as recited in the claims. Although multiple features are described in the embodiments, it is not necessarily the case that all of the features are essential to the invention, and moreover, multiple embodiments may be combined in any way. Furthermore, in the attached drawings, the same or similar portions of the configuration are denoted with the same reference signs, and duplicate description is omitted.

### (Network Configuration)

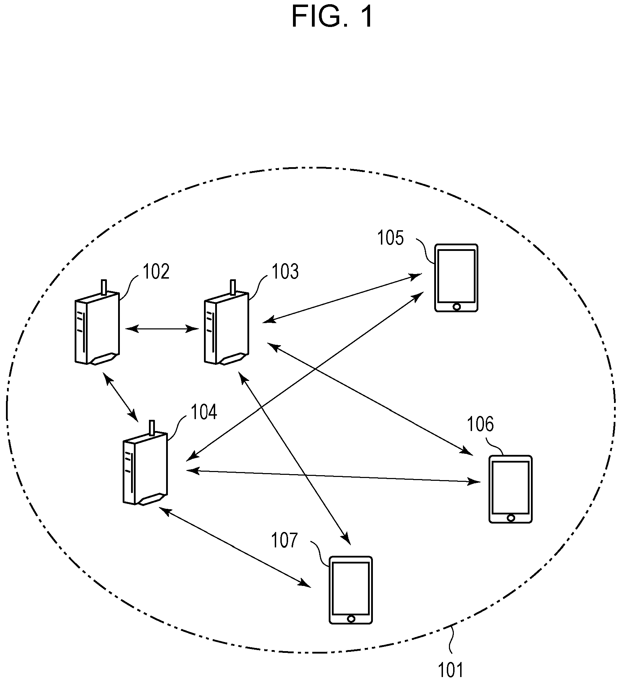

Fig. 1 illustrates an example of a configuration of a wireless communication network according to the present embodiment. This wireless communication network is configured to include access points (communication device 102, communication device 103, and communication device 104; hereinafter AP 102, AP 103, and AP 104) and terminals (communication device 105, communication device 106, and communication device 107; hereinafter STA 105, STA 106, and STA 107). In the following, an access point may be referred to as an "AP" and a station may be referred to as a "STA", without attached a reference number, in cases such as when a particular device is not being pointed out.

Each of the APs 102-104 and the STAs 105-107 is configured to carry out communication of wireless frames in compliance with the IEEE 802.11bn standard that targets a maximum transmission rate from 90 Gbps to over 100 Gbps, being the successor standard to the IEEE 802.11be standard that targets a maximum transmission rate of 46.08 Gbps. Note that IEEE is an acronym for the Institute of Electrical and Electronics Engineers.

The main features of the IEEE 802.11bn standard are support for high-reliability, low-latency communication and Multi-AP communication. Based on the above, in the present embodiment, the IEEE 802.11bn standard that targets a maximum transmission rate from 90 Gbps to over 100 Gbps is also referred to as the IEEE 802.11 UHR or Ultra High Reliability (UHR) standard. Wireless frames communicated under the successor standard are also referred to as UHR PPDUs. PPDU is an acronym for PLCP Protocol Data Unit, and PLCP is an acronym for Physical Layer Convergence Protocol.

Note that the names IEEE 802.11 UHR and UHR standard have been established for convenience based on the goals to be achieved in the successor standard and the features that will be the main focus of the standard, and may be referred to by different names once the standard is finalized. On the other hand, it should be understood that this specification and the appended claims are essentially applicable to all successor standards to the 802.11be standard that could support a function of performing processing for multiple APs to jointly communicate data with a STA.

Each communication device can communicate in the 2.4 Hz band, the 3.6 GHz band, the 5 GHz band, and the 6 GHz band, and can also communicate on frequencies in the 45 GHz band and the 60 GHz band, which are referred to as millimeter waves. The frequency bands that each communication device uses are not limited to the above, and different frequency bands, such as the sub-1 GHz bands for example, may also be used. The APs 102-104 and the STAs 105-107 can also communicate using bandwidths of 20 MHz, 40 MHz, 80 MHz, 160 MHz, 320 MHz, 540 MHz, 640 MHz, 1080 MHz, and 2160 MHz. The bandwidths that each communication device uses are not limited to the above, and different bandwidths, such as 240 MHz and 4 MHz for example, may also be used.

The APs 102-104 and the STAs 105-107 can achieve multi-user (MU) communication, in which signals for multiple users are multiplexed, by carrying out OFDMA communication in compliance with the IEEE 802.11 standards. OFDMA is an acronym for orthogonal frequency-division multiple access. In OFDMA communication, portions (resource units (RUs)) of a divided frequency band are respectively allocated to STAs in a non-overlapping manner, and the respective carrier waves of the STAs are direct. For this reason, an AP can communicate with multiple STAs in parallel within the defined bandwidth.

Note that each communication device supports the IEEE 802.11bn standard, but in addition, may also support legacy standards, that is, standards prior to the IEEE 802.11bn standard. Specifically, each communication device may also support at least one of the IEEE 802.11a/b/g/n/ac/ax/be standards. In addition to the IEEE 802.11 series standards, each communication device may also support other communication standards, such as Bluetooth^{®}, NFC, UWB, ZigBee, and MBOA. Note that UWB is an acronym for ultra-wideband, and MBOA is an acronym for Multi Band OFDM Alliance. NFC is an acronym for near-field communication. UWB includes wireless USB, wireless 1394, WiNET, and the like. Each communication device may also support a communication standard for wired communication, such as wired LAN. Specific examples of the APs 102-104 include a wireless LAN router and a personal computer (PC), but the APs 102-104 are not limited thereto. The APs 102-104 may also be an information processing device such as a wireless chip that can carry out wireless communication in compliance with the IEEE 802.11bn standard. Specific examples of the STAs 105-107 include a camera, a tablet, a smartphone, a PC, a mobile phone, a video camera, and a headset, but the STAs 105-107 are not limited thereto. The STAs 105-107 may also be an information processing device such as a wireless chip that can carry out wireless communication in compliance with the IEEE 802.11bn standard.

Note that although Fig. 1 illustrates a wireless communication network including three APs and three STAs as an example, the numbers of these communication devices may also be two or less, and may also be four or more. In Fig. 1, the range of available communication in the network formed by the APs 102-104 is indicated by the circle 101. Note that the range of available communication may also cover a wider range, and may also cover a narrower range.

In the present embodiment, each of the APs 102-104 constructs a BSS, and the respective BSS color values of the BSSs are all different from each other. BSS color is an acronym for basic service set color, and is an ID for identifying a BSS. Note that a BSS color value for Multi-AP communication may be fixed in advance, and each AP may use a BSS color value while avoiding the BSS color value for Multi-AP communication. The SSIDs that the APs 102-104 indicate in each BSS are all the same. Note that SSID is an acronym for service set identifier, and is an identifier for identifying an access point.

Note that in the present example, a signal transmitted by the AP 102 can be received by the AP 103 and the AP 104, and signals transmitted by the AP 103 and the AP 104 can be received by the AP 102. However, the form of connection is not particularly limited, and each of the AP 102, the AP 103, and the AP 104 may be connected in a wired or wireless manner. Note that the AP 103 and the AP 104 may or may not be capable of transmitting and receiving signals to and from each other. Note that the APs 102-104 are capable of IEEE 802.11bn Multi-AP communication. In other words, the APs 102-104 support a configuration in which multiple APs jointly communicate with the same single STA, as defined in IEEE 802.11bn. For example, the STA 105 can transmit and receives wireless frames in parallel to and from the AP 103 and the AP 104 operating jointly. The STA 105 may have multiple wireless LAN control units, for example, and may be configured to transmit and receive wireless frames to and from multiple APs by using respectively separate wireless channels. Note that the STA 105 may also have a physically singular control unit capable of processing multiple frames received in parallel via multiple wireless channels. In other words, the STA 105 has a configuration whereby logically plural wireless communications can be processed in parallel using physically singular or plural control devices.

Herein, an AP such as the AP 103 and the AP 104, which are controlled by a Coordinator AP and which transmit and receive direct signals with each STA, is referred to as the Coordinated AP. An AP such as the AP 102, which can transmit and receive wireless frames with each STA, at least indirectly, by issuing instructions to the AP 103 and the AP 104, is referred to as the Coordinator AP. The Coordinator AP shares wireless media resources with other APs to execute joint operation, and therefore is also referred to as the sharing AP or the master AP. Similarly, the Coordinated AP is also referred to as the shared AP or the slave AP. Note that the Coordinator AP may also transmit and receive signals to and from the STA 105 directly. For example, the AP 102 may operate as both the Coordinator AP and the Coordinated AP. In this case, for example, the AP 102 may transmit and receive wireless frames between itself and the STA 105 while also issuing instructions causing the AP 103 or the AP 104 to transmit and receive wireless frames to and from a STA. Note that in the case of causing a wireless frame to be transmitted from the Coordinated AP, the Coordinator AP may transmit, to the Coordinated AP, data to be transmitted. However, the configuration is not limited thereto, and the Coordinated AP may also acquire data to be transmitted directly from the Internet, for example. The Coordinator AP may receive, from the Coordinated AP, data that the Coordinated AP received from a STA, but the Coordinated AP may also forward data received from a STA to a partner STA without forwarding the data to the Coordinator AP.

Note that any AP within the same network can operate as the Coordinator AP, and any AP may be determined to operate as the Coordinator AP according to some kind of criterion. Note that the Coordinator AP may also carry out only the role of the Coordinator AP, such as sending instructions to each AP, without operating as an AP that performs Beacon frame transmission. Each AP may also have multiple wireless LAN control units and thereby operate as multiple Coordinated APs. The Coordinator AP may also be achieved as a logical function, and a single physical AP may operate as the Coordinator AP while also operating as one or more Coordinated APs.

### (Configuration of AP/STA)

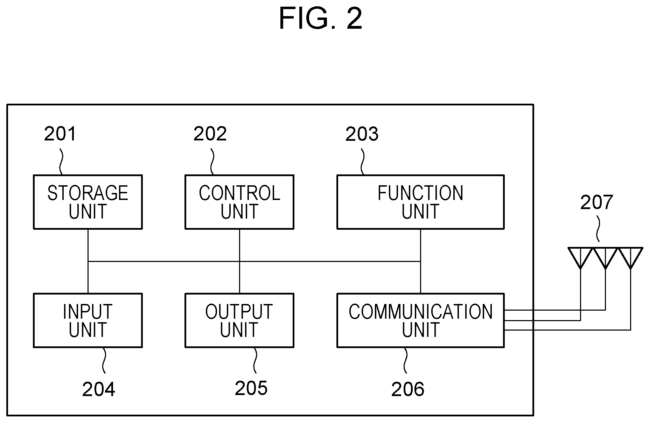

Fig. 2 illustrates an example of a hardware configuration of the communication device (APs 102-104 and STAs 105-107) in the present embodiment. The communication device includes a storage unit 201, a control unit 202, a function unit 203, an input unit 204, an output unit 205, a communication unit 206, and an antenna 207. Note that there may be multiple antennas.

The storage unit 201 is formed from one or more memories such as ROM and/or RAM and stores various information, such as a computer program for performing various operations described later and communication parameters for wireless communication. ROM and RAM are acronyms for read-only memory and random-access memory, respectively. Note that, besides memories such as ROM and RAM, the storage unit 201 may also use storage media such as a flexible disk, a hard disk, an optical disc, a magnetooptical disc, a CD-ROM, a CD-R, magnetic tape, a nonvolatile memory card, or a DVD. The storage unit 201 may also be provided with multiple memories or the like.

The control unit 202 is formed from one or more processors such as a CPU and/or an MPU for example, and controls the communication device as a whole by executing a computer program stored in the storage unit 201, for example. Note that the control unit 202 may also control the communication device as a whole through cooperation between a computer program stored in the storage unit 201 and an operating system (OS). The control unit 202 also generates data and signals (wireless frames) to be transmitted in communication with other communication devices. CPU is an acronym for central processing unit and MPU is an acronym for microprocessing unit. The control unit 202 may also be provided with multiple processors, such as multiple cores, and control the communication device as a whole using the multiple processors.

The control unit 202 also controls the function unit 203 to execute prescribed processing such as wireless communication, imaging, printing, and projection. The function unit 203 is hardware with which the communication device executes the prescribed processing. If the function unit is a printer, the function unit prints image data acquired via the communication unit 206. If the function unit is a scanner, image data generated by scanning with the scanner is transmitted to an external device via the communication unit 206. If the function unit is a camera, image data generated by imaging with the camera is transmitted to an external device via the communication unit 206.

The input unit 204 accepts various operations from a user. The input unit 204 is formed from a touch panel, hardware keys, and/or buttons, for example.

The output unit 205 provides various output to the user via a monitor screen and/or a speaker. In this context, the output provided by the output unit 205 may be visual presentation on the monitor screen, sound output by the speaker, vibration output, and/or the like. Note that both the input unit 204 and the output unit 205 may also be achieved as a single module, like a touch panel. The input unit 204 and the output unit 205 may each be integrated with, or discrete from, the communication device.

The communication unit 206 controls wireless communication in compliance with the IEEE 802.11bn standard. The communication unit 206 may also control wireless communication in compliance with other IEEE 802.11 series standards in addition to the IEEE 802.11bn standard, and also control wired communication such as wired LAN. The communication unit 206 controls the antenna 207 to transmit and receive signals for wireless communication generated by the control unit 202.

Note that if the communication device supports the NFC standard, the Bluetooth standard, and/or the like in addition to the IEEE 802.11bn standard, the communication unit 206 may also control wireless communication in compliance with these communication standards. If the communication device can execute wireless communication in compliance with multiple communication standards, the communication device may be configured to have a separate communication unit and antenna corresponding to each of the communication standards. The communication communicates data, such as image data, document data, and video data, with a counterpart communication device via the communication unit 206. Note that the antenna 207 may be configured to be discrete from the communication unit 206, or may be combined with the communication unit 206 to form a single module.

The antenna 207 is capable of communication in the 2.4 GHz band, the 5 GHz band, the 6 GHz band, the 45 GHz band, and the 60 GHz band. In the present embodiment, the communication device has two antennas, but may also have three antennas. The communication device may also have a different antenna for each frequency band. If the communication device has multiple antennas, the communication device may also have a communication unit 206 corresponding to each antenna.

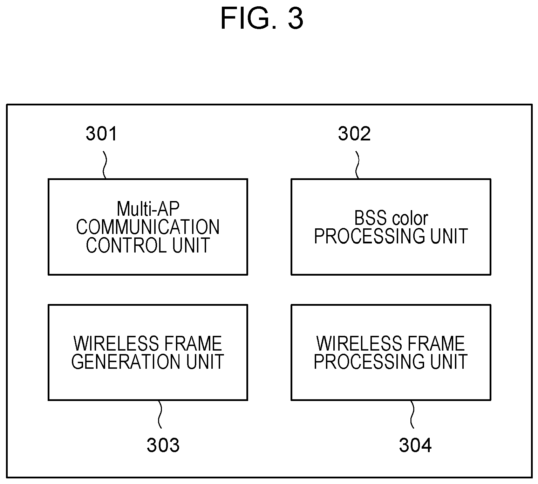

Fig. 3 illustrates a block diagram of a functional configuration of the APs 102-104 and the STAs 105-107 in the present embodiment. The diagram illustrates a functional configuration that is achieved by, for example, having one or more processors execute a program stored in one or more memories.

The APs 102-104 and the STAs 105-107 includes a MultiAP communication control unit 301, a BSS color processing unit 302, a wireless frame generation unit 303, and a wireless frame processing unit 304.

The MultiAP communication control unit 301 is a function unit that controls processing by which the APs 102-104 form a group for carrying out Multi-AP communication, processing to add or remove participating APs, processing to share network information including a BSS color value for Multi-AP communication, and communication between APs. The MultiAP communication control unit 301 also carries out, among other things, control by which the STAs 105-107 establish a connection for Multi-AP communication.

The BSS color processing unit 302 is a function unit that sets BSS colors associated with BSSs respectively constructed by the APs 102-104, and configures the BSS color value of a wireless frame to be transmitted to a STA according to whether or not the wireless frame supports Multi-AP communication. The BSS color processing unit 302 is also a function unit that acquires a BSS color value included in a wireless frame received by the STAs 105-107, ascertains whether the BSS color value is for Multi-AP communication, and ascertains whether the wireless frame should be processed or discarded, on the basis of the BSS color value.

The wireless frame generation unit 303 is a function unit that generates wireless frames for wireless frame exchange when communicating with a connected STA or AP. The APs 102-104 set a BSS color value for Multi-AP communication in the BSS Color field of a wireless frame to be generated in the case of carrying out Multi-AP communication.

The wireless frame processing unit 304 transmits wireless frames, including management frames, data frames, and control frames generated by the wireless frame generation unit 303, and receives wireless frames from a partner device.

### (Flow of Processing)

The following describes several embodiments of the flow of processing executed by APs and STAs having the configuration described above, a sequence in the wireless communication system, and the like.

### (Example 1)

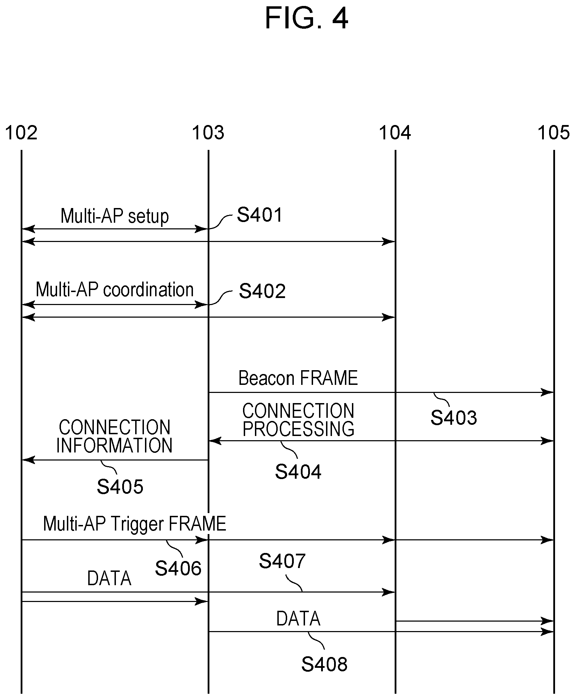

Fig. 4 is a sequence diagram illustrating an example of processing in which the AP 102 operates as the Coordinator AP, and the AP 103 and the AP 104, which are Coordinated APs, operate jointly to transmit data in parallel to the STA 105.

In this processing, first, Multi-AP setup processing is performed among the APs 102-104 (S401). In the Multi-AP setup processing, capability information and parameters are exchanged among the APs, and a group for carrying out Multi-AP communication is formed. Next, Multi-AP coordination processing is performed among the APs 102-104 (S402). In the Multi-AP coordination processing, a Multi-AP communication scheme such as distributed MIMO or joint beamforming is determined, it is determined which AP is to operate in the role of the Coordinator AP (and which APs are to operate in the role of the Coordinated APs), the communication quality between each AP and the STA is measured, and parameters and network information are exchanged among the APs. For example, parameters for APs are exchanged among the AP 102, the AP 103, and the AP 104, and the parameters are compared to determine the AP that is to operate as the Coordinator AP. Note that in this processing example, the AP 102 is determined to operate as the Coordinator AP, and the AP 103 and the AP 104 are determined to operate as the Coordinated APs. Thereafter, network information such as a BSS color value for Multi-AP communication, an SSID, and a BSSID is provided in a notification from the AP 102 operating as the Coordinator AP to the AP 103 and the AP 104 operating as the Coordinated APs. The AP 103 and the AP 104 receives the network information provided in a notification. The BSS color value for Multi-AP communication that is selected at this point is set to a different value than the BSS color value that each AP that is to carry out Multi-AP communication sets for its own network. It is also possible to check the BSS color values used by surrounding APs from wireless frames such as Beacon frames and Probe Response frames received from surrounding APs, and select a value not being used by surrounding APs as the BSS color value for Multi-AP communication. It is also possible to consider the Coordinator AP and the Coordinated APs as APs associated with the same AP MLD, and determine the BSS color value for Multi-AP communication on the basis of the MLD MAC address. The Coordinated APs may also be able to respond whether to accept or reject the use of the BSS color value for Multi-AP communication provided in a notification from the Coordinator AP. For example, a Coordinated AP may reject the BSS color value for Multi-AP communication provided in a notification from the Coordinator AP if the value is already in use by an AP in the vicinity of the Coordinated AP. In the case of rejecting, the Coordinated AP may also notify the Coordinator AP of a desired BSS color value for Multi-AP communication. A value agreed upon through negotiation among the multiple APs in this way may be used as the BSS color for Multi-AP communication, or a value determined by and provided in a notification from the Coordinator AP may be used. Note that if the roles of the Coordinator AP and the Coordinated APs are predetermined, some of the processing in S401 and S402 may be omitted. Note that the BSS color value for Multi-AP communication may be shared during the Multi-AP setup processing (S401), but may also be shared in a Multi-AP Trigger frame described later.

The AP 103 transmits a Beacon frame according to the network information provided in a notification (S403). Note that the Beacon frame contains information indicating that Multi-AP communication can be carried out with respect to a connected STA. Note that the AP at this point may be a logical AP, and two logical APs, specifically an AP operating in the 2.4 GHz band and an AP operating in the 5 GHz band for example, may be included within a single AP. In other words, data transmission and reception by multiple APs may include data transmission and reception by a single physical AP capable of operating as multiple logical APs. The AP 103 adds a Multi-AP Information Element to a Beacon frame for example, and transmits the Beacon frame with the inclusion of information such as an SSID, a BSSID, a BSS color value for Multi-AP communication, and an operating wireless channel to be used by multiple Coordinated APs capable of joint operation. The method and configuration for storing the above information is not limited, and the AP 103 may store and transmit similar information in a similar format. The Multi-AP Information Element may have other names such as Multi-AP element, MAP Information Element, and MAP Element. Note that the Multi-AP Information Element may also be included in a wireless frame such as a Probe Response frame or some other Action frame. The STA 105, upon receiving the Beacon frame, performs connection processing with at least one of the multiple Coordinated APs on the basis of the information included in the Beacon frame (S404). The connection processing at this point includes processing such as Authentication and Association defined in the IEEE 802.11 standards series. The STA 105 indicates a request for Multi-AP communication by adding a Multi-AP Information Element to an Association Request frame to be transmitted, for example. The AP 103 having received the Association Request frame transmits an Association Response frame as a response. Note that a BSS color value for Multi-AP communication may be included in the Association Response frame directed at the STA. Upon having achieved a connected state in which a connection with the STA 105 is established, the AP 103 notifies the Coordinator AP that a connected state with the STA has been achieved, along with connection parameters (S405). At this time, if a single physical AP has achieved a connected state with the STA as two logical APs, the Coordinator AP may be notified of as much. Note that in Fig. 4, only the AP 103 has achieved a connected state with the STA 105, but the AP 104 may similarly transmit a Beacon frame, connect to the STA 105, and notify the Coordinator AP (AP 102) that a connected state has been achieved. However, the configuration is not limited thereto, and for example, the STA may achieve a connected state with only one of the multiple Coordinated APs. In this case, for example, a wireless frame transmitted from another Coordinated AP not in the connected state may be handled as a wireless frame that, from the perspective of the STA, is from the Coordinated AP that is in the connected state. Note that in the present embodiment, the PHY preamble of a wireless frame can be decoded to recognize, according to the BSS color value, that signals are transmitted from multiple Coordinated APs (a Multi-AP Coordination system has been configured).

The Coordinator AP manages the connection parameters of the Coordinated AP that is in a connected state with the STA to thereby determine transmission parameters on the basis of the information and allocate transmission data thereafter. The transmission parameter information determined in the Coordinator AP is provided in a notification to the Coordinated APs via a Multi-AP Trigger frame, and the AP 103 and the AP 104 set their own transmission parameters on the basis of the information provided in the notification (S406). The Multi-AP Trigger frame is a name given out of convenience to a frame that triggers transmission by each AP when carrying out Multi-AP communication, but may also have other names. The Multi-AP Trigger frame may be an extension of the Trigger frame in the IEEE 802.11ax standard or the IEEE 802.11be standard. Note that the BSS color value for Multi-AP communication, and/or transmission timing information for data to be transmitted that is forwarded in S407, may also be provided in a notification to the APs and/or the STA by being included among the transmission parameters. In the case of including the BSS color value for Multi-AP communication among the transmission parameters in the Multi-AP Trigger frame, a Padding field may be provided in the Multi-AP Trigger frame to give the AP 103 and the AP 104 processing time to be ready to transmit a Multi-AP communication data frame (S408). The Multi-AP Trigger frame may also be transmitted to the STA 105, the BSS color value for Multi-AP communication may be included, and a Padding field may be provided in the Multi-AP Trigger frame to give the STA processing time to be ready to receive a Multi-AP communication data frame (S408). The Padding field may include a bit sequence for filling a prescribed amount of time, such as 8 microseconds or 16 microseconds for example. This makes it possible to ensure the processing time required to switch from a BSS color value previously in use to the BSS color value for Multi-AP communication. The connection parameters may also include information on a transmission rate and an error rate for each connection. For example, the Coordinator AP may allocate more transmission data to a Coordinated AP with a connection having a high transmission rate, and allocate less transmission data to a Coordinated AP with a connection having a low transmission rate. This allows for the efficient execution of data transmission to the STA from each Coordinated AP. The connection parameters may also be updated periodically by each Coordinated AP to reflect the current connection conditions, and may be provided in a notification to the Coordinator AP. Thereafter, the Coordinated APs receive transmission data directed at the STA from the Coordinator AP (S407), and transmit the data to the STA (S408). At this time, the PHY preamble of the wireless frame of the data transmitted by each of the AP 103 and the AP 104 contains the BSS color value for Multi-AP communication, which is set to the same value. The STA 105 compares the BSS color value for Multi-AP communication directed at STA 105 acquired from the AP 103 with which a connection has been established to the BSS color value included in the PHY preamble of a wireless frame received in S408. If the BSS color values match, the STA 105 processes the received wireless frame is processed, whereas if the BSS color values do not match, the STA 105 discards the received wireless frame. Note that in this example, the data to be transmitted is forwarded from the AP 102 to the AP 103 and the AP 104 after the Multi-AP Trigger frame is transmitted, but the data to be transmitted may also be forwarded in advance at the Multi-AP coodination processing stage in S402. This eliminates the need for the transmission timing information for the data to be transmitted that is forwarded in S407 among the transmission parameter information in the Multi-AP Trigger frame.

On the other hand, the Coordinator AP, upon receiving data from the STA, transmits the received data to the Coordinated APs. Note that this sequence of data transmission and reception is an example, and data may also be transmitted and received in a form different from the form illustrated in the diagram. For example, the reception of data from the STA may be performed prior to the transmission of data to the STA.

### (Wireless Frame Structure)

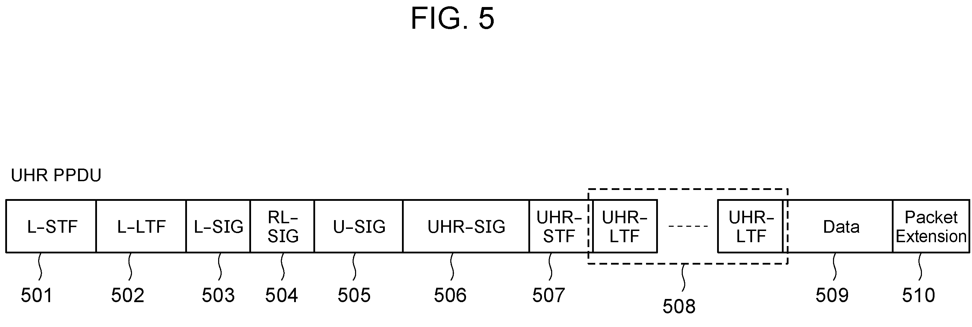

An example of the Physical Layer (PHY) Protocol Data Unit (PPDU) established in the IEEE 802.11bn standard and transmitted in the present invention is illustrated in Fig. 5.

The UHR PPDU includes short training fields (STF), long training fields (LTF), and signal fields (SIG). As illustrated in Fig. 5, the beginning of the PPDU has L (Legacy)-STF 501, L-LTF 502, and L-SIG 503 for ensuring backward compatibility with the IEEE 802.11a/b/g/n/ax standards. Note that L-LTF is placed immediately after L-STF, and LSIG is placed immediately after L-LTF. Note that the configuration in Fig. 5 further includes a Repeated L-SIG (RL-SIG 504) placed immediately after L-SIG. In RL-SIG, the content of L-SIG is repeated and transmitted. RL-SIG enables the receiver to recognize that the PPDU is in compliance with the IEEE 802.11ax and later standards, and in some cases may be omitted in IEEE 802.11bn. In place of RL-SIG, a field may be provided to enable the receiver to recognize that the PPDU is an IEEE 802.11bn PPDU. The fields of the PPDU need not be arranged in the order illustrated in Fig. 5, and may also include new fields not illustrated in Fig. 5.

L-STF 501 is used for PHY frame signal detection, automatic gain control (AGC), timing detection, and the like. L-LTF 502 is used for precise frequency/time synchronization, channel state information (CSI) acquisition, and the like. L-SIG 503 is used for transmitting control information including information on the data transmission rate and the PHY frame length.

Legacy equipment that follows the IEEE 802.11a/b/g/n/ax/be standards can decode these various legacy fields.

The UHR PPDU further includes a U-SIG (Universal SIG, U-SIG 505) field which is placed immediately after RL-SIG and which includes information common to IEEE 802.11be and later standards.

The UHR PPDU further includes UHR-SIG (UHR-SIG 506) for transmitting control information for UHR. Also, each PPDU has an STF for UHR (UHR-STF 507) and LTFs for UHR (UHR-LTFs 508). In each PPDU, a Data field 509 and a Packet Extension field 510 are placed after these control fields. The fields from L-STF to UHR-LTF in the UHR PPDU are called the PHY preamble.

Note that Fig. 5 illustrates a PPDU capable of ensuring backward compatibility as an example, but the legacy fields may also be omitted if it is not necessary to ensure backward compatibility, for example.

In this case, for example, UHR-STF and UHR-LTF are used in place of L-STF and L-LTF to establish synchronization. Also, in this case, UHR-STF and/or one of the multiple UHR-LTFs after UHR-SIG may be omitted.

Ss indicated in the following Table 1, U-SIG 506 included in the UHR PPDU includes U-SIG1 and U-SIG2, which are necessary for PPDU reception.

**[Table 1]**

| | Bit position | Field | No. of bits | Description |
|---|---|---|---|---|
| U-SIG1 | B0-B2 | PHY Version Identifier | 3 | Identifier for identifying different PHY versions |
| | B3-B5 | Bandwidth | 3 | Indicates bandwidth |
| | B6 | UL/DL | 1 | Indicates whether PPDU is for UL or for DL |
| | B7-B12 | BSS color | 6 | BSS identifier |
| | B13-B19 | TXOP | 7 | Indicates whether Dual Carrier Modulation is applied to Data field. |
| | | | | 1: STBC field is 0. |
| | | | | (When both the DCM and STBC fields are 1, neither is applied.) |
| | | | | 0: DCM is not applied. |
| | B20-B25 | Disregard | 6 | All bits are set to 1 as value to disregard |
| U-SIG2 | B0-B15 | Disregard | 16 | All bits are set to 1 as value to disregard |
| | B16-B19 | CRC | 4 | CRC of bits 0-41 of U-SIG field |
| | B20-B25 | Tail | 6 | Terminates trellis of convolutional decoder. Set to 0. |

Table 1 indicates U-SIG1 and USIG2 used in the IEEE 802.11be standard. A BSS identifier can be stored in the BSS color field of B7-B12. An AP that carries out Multi-AP communication sets, in the BSS color field, the BSS color value of its own BSS to a value different from the BSS color value of the BSS of another AP that carries out joint operation. In the case of not carrying out Multi-AP communication, the AP sets the BSS color value of its own BSS in the BSS color field.

U-SIG 506 may also include U-SIG1 and USIG2 as indicated in the following Table 2.

**[Table 2]**

| | Bit position | Field | No. of bits | Description |
|---|---|---|---|---|
| U-SIG1 | B0-B2 | PHY Version Identifier | 3 | Identifier for identifying different PHY versions |
| | B3-B5 | Bandwidth | 3 | Indicates bandwidth |
| | B6 | UL/DL | 1 | Indicates whether PPDU is for UL or for DL |
| | B7-B12 | BSS color | 6 | First BSS identifier |
| | B13-B19 | TXOP | 7 | Indicates whether Dual Carrier Modulation is applied to Data field. |
| | | | | 1: STBC field is 0. |
| | | | | (When both the DCM and STBC fields are 1, neither is applied.) |
| | | | | 0: DCM is not applied. |
| | B20 | Non Multi-AP | 1 | Indicates whether or not Multi-AP joint communication is performed. |
| | | | | 0: Multi-AP joint communication is performed. |
| | | | | 1: Multi-AP joint communication is not performed. |
| | B21-B25 | Disregard | 5 | All bits are set to 1 as value to disregard |
| U-SIG2 | B0-B15 | Disregard | 16 | All bits are set to 1 as value to disregard |
| | B16-B19 | CRC | 4 | CRC of bits 0-41 of U-SIG field |
| | B20-B25 | Tail | 6 | Terminates trellis of convolutional decoder. Set to 0. |

In this example, the Non Multi-AP field of B20 is used to indicate whether or not Multi-AP communication is being carried out. In the Non Multi-AP field, a value of 0 indicates that Multi-AP joint communication is being carried out, while a value of 1 indicates that Multi-AP joint communication is not being carried out.

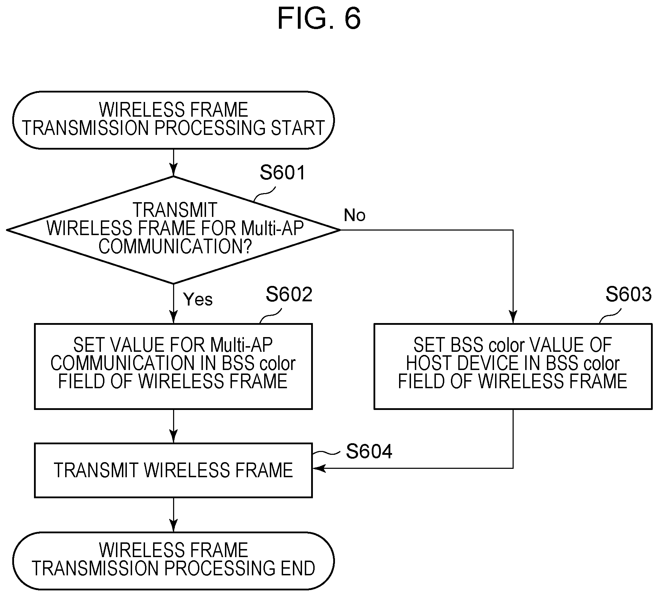

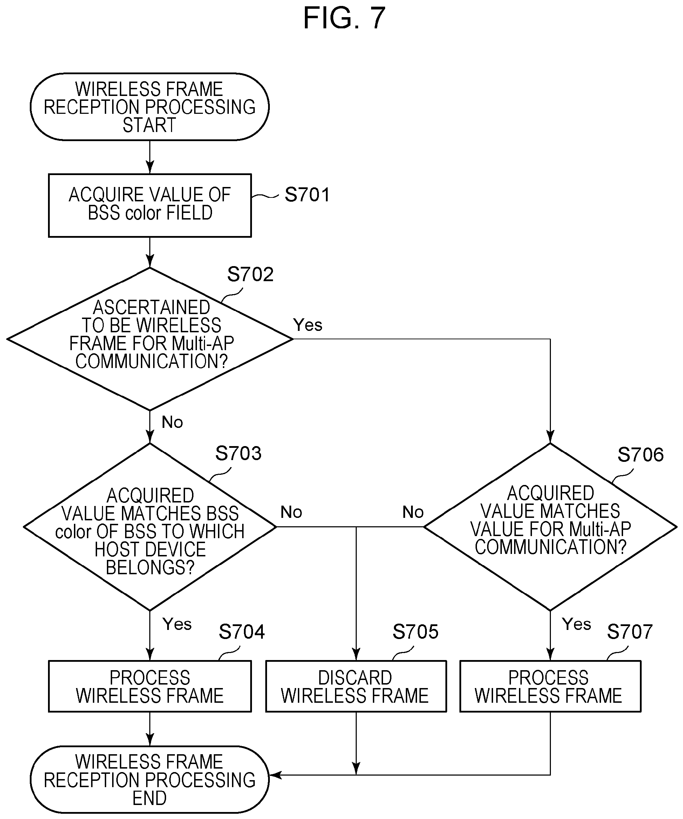

The following uses Figs. 6 and 7 to describe the flow of processing executed by APs and STAs having the configuration described above.

Fig. 6 is a flowchart illustrating an example of processing to be executed in an AP. This processing is executed when the AP transmits a wireless frame. In S601, the AP ascertains whether or not a wireless frame to be transmitted is a wireless frame for Multi-AP communication. If the wireless frame is for Multi-AP communication, the AP sets a BSS color value for Multi-AP communication in the BSS color field of the PHY preamble of the wireless frame in S602, and transmits the wireless frame in S604. The BSS color value for Multi-AP communication is determined when carrying out the Multi-AP coordination processing in S402 of Fig. 4 for example, and is shared in advance among multiple APs. If the wireless frame to be transmitted by the AP is not a wireless frame for Multi-AP communication, the AP sets the BSS color value of its own BSS in the BSS color field of the PHY preamble of the wireless frame, and transmits the wireless frame in S604.

Fig. 7 is a flowchart illustrating an example of processing to be executed in a STA. This processing is executed when the STA receives a wireless frame. In S701, the STA acquires the value of the BSS color field of the PHY preamble of the received wireless frame. Next, in S702, the STA ascertains whether or not the received wireless frame is a wireless frame for Multi-AP communication. For example, if the PPDU format in Table 1 is used, the STA can reference the value of the BSS color field to ascertain whether or not the value is set to a BSS color value for Multi-AP communication. The BSS color value for Multi-AP communication may be acquired from an AP in the Beacon frame in Fig. 4 for example, may be acquired from a Probe Response frame or an Association Response frame transmitted from an AP when the STA connects to the AP, or may be acquired from a Multi-AP Trigger frame. If the PPDU format in Table 2 is used, the STA can ascertain whether or not the wireless frame is for Multi-AP communication by referencing the value of the Non Multi-AP field. If the result of the ascertaining is that the wireless frame is not for Multi-AP communication, the STA advances the processing to S703. In S703, the STA checks whether or not the value of the BSS color field acquired in S701 matches the BSS color value of the BSS to which the STA itself belongs. If the values match, the STA advances the processing to S704, decodes the Data field of the wireless frame, and performs processing in accordance with the content of the Data field. On the other hand, if the values do not match, the STA advances the processing to S705 and discards the received wireless frame. Also, if the wireless frame received in S702 is ascertained to be a wireless frame for Multi-AP communication, the STA advances the processing to S706. In S706, the STA checks whether or not the value of the BSS color field acquired in S701 matches the BSS color value for Multi-AP communication. If the values match, the STA advances the processing to S707, decodes the Data field of the wireless frame, and performs processing in accordance with the content of the Data field. On the other hand, if the values do not match, the STA advances the processing to S705 and discards the received wireless frame.

As above, in the present example, when carrying out Multi-AP communication, the Coordinator AP and the Coodinated AP transmit PPDUs in which the same BSS color is set in the PHY preamble. At this time, a BSS color value for Multi-AP communication is used. APs share the BSS color value for Multi-AP communication during the Multi-AP setup or Multi-AP coodination processing, or by using a Multi-AP Trigger frame or the like. The BSS color value for Multi-AP communication is provided in a notification to a STA via a management frame such as Beacon frame, an Association Response frame, or a Probe Response frame, via a Multi-AP Trigger frame, or the like.

A STA carrying out Multi-AP communication can check the BSS color value to ascertain that wireless frames are for Multi-AP communication and appropriately process wireless frames received from multiple APs. There is also the problem of PHY preamble collision in the case where wireless frames transmitted by the Coordinator AP and the Coodinated AP have different PHY preambles, but in the present example, the contents of the PHY preambles of the wireless frames can be matched across multiple APs, and PHY preamble collision can be avoided. Also, when a legacy STA supporting the IEEE 802.11be standard or an earlier standard or a STA that does not carry out Multi-AP communication receives a wireless frame for Multi-AP communication, the STA can check the BSS color value to discard the wireless frame without further processing. This allows the STA to perform power-saving operations.

Note that besides the APs 102-104 and the STAs 105-107, which are communication devices, it is also possible to carry out the present invention using an information processing device (for example, a wireless chip) that generates the above PHY preamble.

### (Example 2)

Example 2 indicates an example in which a wireless frame for Multi-AP communication is processed appropriately by providing two BSS color fields in the UHR PPDU rather than setting a BSS color value for Multi-AP communication in the UHR PPDU.

The U-SIG field included in the UHR PPDU of the present example uses a format as indicated in the following Table 3.

**[Table 3]**

| | Bit position | Field | No. of bits | Description |
|---|---|---|---|---|
| U-SIG1 | B0-B2 | PHY Version Identifier | 3 | Identifier for identifying different PHY versions |
| | B3-B5 | Bandwidth | 3 | Indicates bandwidth |
| | B6 | UL/DL | 1 | Indicates whether PPDU is for UL or for DL |
| | B7-B12 | BSS color1 | 6 | First BSS identifier |
| | B13-B19 | TXOP | 7 | Indicates whether Dual Carrier Modulation is applied to Data field. |
| | | | | 1: STBC field is 0. |
| | | | | (When both the DCM and STBC fields are 1, neither is applied.) |
| | | | | 0: DCM is not applied. |
| | B20-B25 | BSS color2 | 6 | Second BSS identifier. If not used, all bits are set to 1 as value to disregard. |
| U-SIG2 | B0-B15 | Disregard | 16 | All bits are set to 1 as value to disregard |
| | B16-B19 | CRC | 4 | CRC of bits 0-41 of U-SIG field |
| | B20-B25 | Tail | 6 | Terminates trellis of convolutional decoder. Set to 0. |

In Table 3, a BSS color2 field (B20-B25) that indicates a second BSS identifier is provided in addition to a BSS color1 field (B7-B12) that indicates a first BSS identifier. This allows the AP to store, in U-SIG1, both its own BSS color value and the BSS color value of another AP that carries out joint operation. A STA receiving such a UHR PPDU can check that the BSS color1 and BSS color2 values are set to thereby recognize that the PPDU is for Multi-AP communication. Also, APs that carry out Multi-AP communication can share in advance the order of the BSS colors values of the APs to be stored in the BSS color1 field and the BSS color2 field, such that each AP uses a PHY preamble with the same content. This makes it possible to avoid PHY preamble collision between UHR PPDUs transmitted from two APs. As an example, out of the APs that are to carry out Multi-AP communication, the BSS color value with the smaller number may be set in the BSS color1 field, and the BSS color value with the larger number may be set in the BSS color1 field. As another example, the BSS color values that should be set in the BSS color1 field and the BSS color2 field may be shared between APs in the Multi-AP setup processing (S401), the Multi-AP coordination processing (S402), the Beacon frame (S403), the connection information (S405), or the Multi-AP Trigger frame of Fig. 4.

As yet another example, the U-SIG field may also include USIG1 and U-SIG2 as indicated in the following Table 4.

**[Table 4]**

| | Bit position | Field | No. of bits | Description |
|---|---|---|---|---|
| U-SIG1 | B0-B2 | PHY Version Identifier | 3 | Identifier for identifying different PHY versions |
| | B3-B5 | Bandwidth | 3 | Indicates bandwidth |
| | B6 | UL/DL | 1 | Indicates whether PPDU is for UL or for DL |
| | B7-B12 | BSS color1 | 6 | First BSS identifier |
| | B13-B19 | TXOP | 7 | Indicates whether Dual Carrier Modulation is applied to Data field. |
| | | | | 1: STBC field is 0. |
| | | | | (When both the DCM and STBC fields are 1, neither is applied.) |
| | | | | 0: DCM is not applied. |
| | B20 | Non Multi-AP | 1 | Indicates whether or not Multi-AP joint communication is performed. |
| | | | | 0: Multi-AP joint communication is performed. |
| | | | | 1: Multi-AP joint communication is not performed. |
| | B21-B25 | Disregard | 5 | All bits are set to 1 as value to disregard |
| U-SIG2 | B0-B5 | BSS color2 | 6 | If Non Multi-AP=0, indicates second BSS identifier. If Non Multi-AP=1, all bits are set to 1 as value to disregard. |
| | B6-B15 | Disregard | 10 | All bits are set to 1 as value to disregard |
| | B16-B19 | CRC | 4 | CRC of bits 0-41 of U-SIG field |
| | B20-B25 | Tail | 6 | Terminates trellis of convolutional decoder. Set to 0. |

In Table 4, unlike the case of Table 3, a Non Multi-AP field is provided in U-SIG1, and a BSS color2 field is provided in U-SIG2. The content of the Non Multi-AP field is similar to the content of the Non Multi-AP field in Table 2. By providing the Non Multi-AP field, the content of the BSS color2 field is checked and processed only if the Non Multi-AP field of the received PPDU is 0.

Note that in the examples in Table 3 and Table 4, the configuration is such that BSS color2 is stored in the U-SIG field, but the configuration may also be such that BSS color2 is stored in a SIG field different from the USIG field, such as the UHR-SIG field for example.
Also, in the examples in Table 3 and Table 4, two fields for storing BSS colors are provided, but three or more fields for storing BSS colors may also be provided.

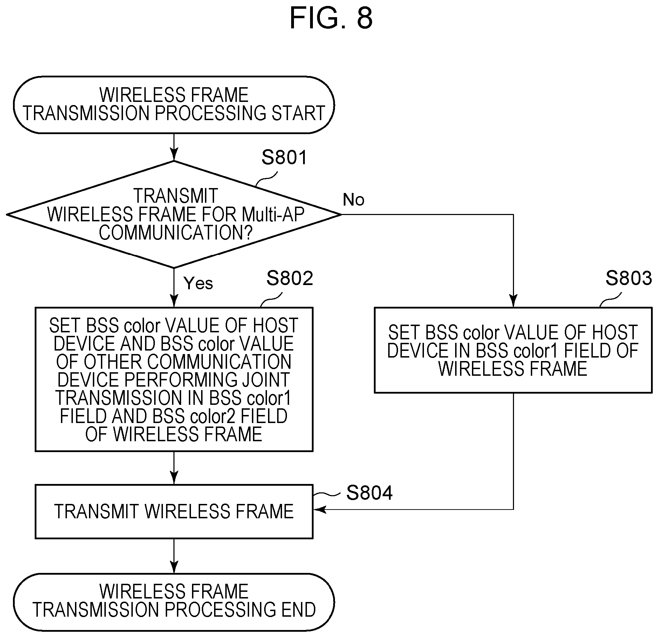

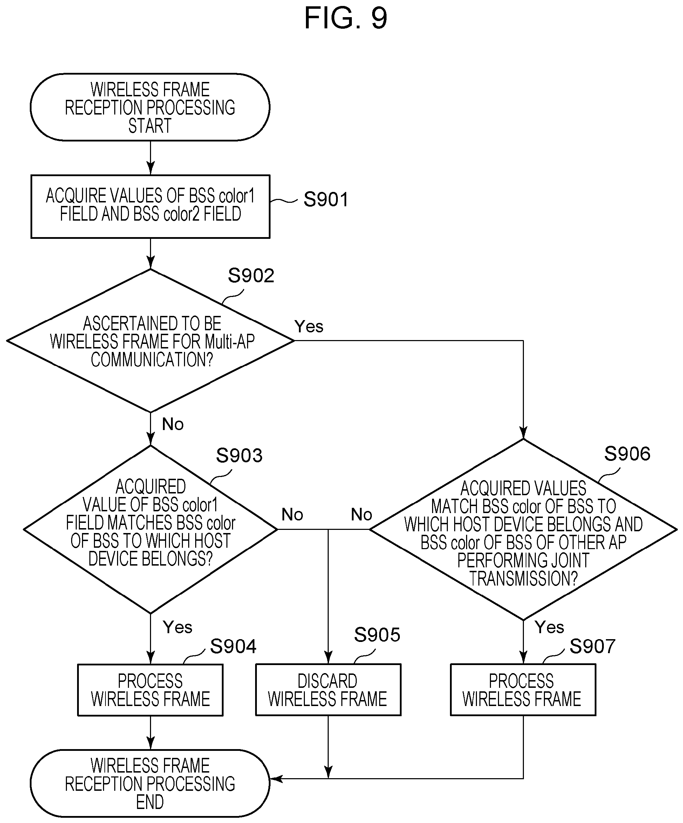

The following uses Figs. 8 and 9 to describe the flow of processing executed by APs and STAs having the configuration described above.

Fig. 8 is a flowchart illustrating an example of processing to be executed in an AP. This processing is executed when the AP transmits a wireless frame. In S801, the AP ascertains whether or not a wireless frame to be transmitted is a wireless frame for Multi-AP communication. If the wireless frame is for Multi-AP communication, in S802, the AP sets its own BSS color value in the BSS color1 field, and sets the BSS color value of an AP that carries out joint transmission in the BSS color2 field, of the PHY preamble of the wireless frame. APs share BSS color values for Multi-AP communication by using Multi-AP setup, Multi-AP coodination, a Beacon frame, connection information, a Multi-AP Trigger frame, or the like. Thereafter, the AP transmits the wireless frame in S804. Note that there is the problem of PHY preamble collision in the case where wireless frames transmitted by the Coordinator AP and the Coodinated AP have different PHY preambles. For this reason, it is assumed that the other AP that carries out joint transmission sets its own BSS color value in the BSS color2 field and sets the BSS color value of an AP different from itself that carries out joint transmission in the BSS color1 field. This allows for the contents of the PHY preambles of the wireless frames to be matched across multiple APs, and PHY preamble collision can be avoided. If the wireless frame to be transmitted by the AP is not a wireless frame for Multi-AP communication, the AP sets the BSS color value of its own BSS in the BSS color1 field of the PHY preamble of the wireless frame, sets the value of the BSS color2 field to all 1s, and transmits the wireless frame in S803.

Fig. 9 is a flowchart illustrating an example of processing to be executed in a STA. This processing is executed when the STA receives a wireless frame. In S901, the STA acquires the value of the BSS color1 field and the value of the BSS color2 field of the PHY preamble of the received wireless frame. Next, in S902, the STA ascertains whether or not the received wireless frame is a wireless frame for Multi-AP communication. For example, if the PPDU format in Table 3 is used, the STA references the value of the BSS color2 field, and if all bits are set to 1, the STA ascertains that the wireless frame is not for Multi-AP communication and advances the processing to S903. If the PPDU format in Table 4 is used, the STA can ascertain whether or not the wireless frame is for Multi-AP communication by referencing the value of the Non Multi-AP field. In S903, the STA checks whether or not the value of the BSS color1 field acquired in S901 matches the BSS color value of the BSS to which the STA itself belongs. If the values match, the STA advances the processing to S904. In S904, the STA decodes the Data field of the wireless frame, and performs processing in accordance with the content of the Data field. On the other hand, if the values do not match, the STA advances the processing to S905 and discards the received wireless frame. Also, if the wireless frame received in S902 is ascertained to be a wireless frame for Multi-AP communication, the STA advances the processing to S906. In S906, the STA checks whether or not the values of the BSS color1 field and the BSS color2 field acquired in S901 respectively match the BSS color value of the BSS to which the STA itself belongs and the BSS color value of another AP that carries out joint transmission. If the values match, the STA advances the processing to S907. Note that the order of the BSS color values to be stored in the BSS color1 field the BSS color2 field is assumed to be determined in advance between the APs that carry out Multi-AP communication. Also, the BSS color value to be used for Multi-AP communication is provided in a notification to the STA via a management frame such as Beacon frame, an Association Response frame, or a Probe Response frame, via a Multi-AP Trigger frame, or the like. In S907, the STA decodes the Data field of the wireless frame, and performs processing in accordance with the content of the Data field. On the other hand, if the values do not match, the STA advances the processing to S905 and discards the received wireless frame.

As above, in the present example, by adding a new BSS color field to the PHY preamble, when carrying out Multi-AP communication, the Coordinator AP and the Coodinated AP transmit PPDUs in which the BSS colors of both the Coordinator AP and the Coodinated AP are set in the PHY preamble. With this arrangement, when carrying out Multi-AP communication, an AP that transmits data can convey the BSS color values of multiple APs that carry out Multi-AP communication to a STA. With this arrangement, a STA carrying out Multi-AP communication can ascertain whether or not a wireless frame is for Multi-AP communication with multiple APs that the STA itself desires, and can appropriately process wireless frames received from the multiple APs.

### (Other Embodiments)

The present invention is also achievable by a process of supplying a program for achieving one or more functions of the embodiment described above to a system or a device via a network or a storage medium, and having one or more processors in a computer of the system or device read out and execute the program. The present invention is also achievable by a circuit (for example, an ASIC) that achieves the one or more functions.

### (Summary of Embodiments)

At least some of the embodiments described above are summarized as follows.

### (Item 1)

A communication device for carrying out communication in compliance with an IEEE 802.11 standard, the communication device characterized by comprising:
a constructing means for constructing a first Basic Service Set, BSS; and
a transmitting means for operating jointly with a first other communication device to transmit a wireless frame to a second other communication device, wherein
in a case of operating jointly with the first other communication device to transmit a wireless frame to the second other communication device, a value different from a BSS color value for the first BSS and different from a BSS color value for a second BSS constructed by the second other communication device is set in a BSS color field of the wireless frame.

### (Item 2)

The communication device according to item 1, characterized by comprising
a notifying means for providing the value set in the BSS color field of the wireless frame to the first other communication device in a notification.

### (Item 3)

The communication device according to item 2, characterized in that
the notifying by the notifying means is performed using a Trigger frame frame.

### (Item 4)

The communication device according to item 3, characterized in that
the Trigger frame frame includes Padding information pertaining to a processing time until receiving the wireless frame.

### (Item 5)

The communication device according to any one of items 1 to 4, characterized by comprising
an acquiring means for acquiring the value set in the BSS color field of the wireless frame from the first other communication device.

### (Item 6)

The communication device according to item 5, characterized in that
the acquiring by the acquiring means is performed using a Trigger frame frame.

### (Item 7)

The communication device according to item 6, characterized in that
the Trigger frame frame includes Padding information pertaining to a processing time until transmitting or receiving the wireless frame.

### (Item 8)

The communication device according to any one of items 1 to 7, characterized by comprising
a notifying means for providing the value set in the BSS color field of the wireless frame to the second other communication device in a notification.

### (Item 9)

The communication device according to item 8, characterized in that
the notifying by the notifying means is performed using at least one from among a Beacon frame, an Association Response frame, a Probe Response frame, and a Trigger frame.

### (Item 10)

A communication device for carrying out communication in compliance with an IEEE 802.11 standard, the communication device characterized by comprising:
a constructing means for constructing a first Basic Service Set, BSS; and
a transmitting means for operating jointly with a first other communication device to transmit a wireless frame to a second other communication device, wherein
in a case of operating jointly with the first other communication device to transmit a wireless frame to the second other communication device, a BSS color value for the first BSS is set in a first BSS color field of the wireless frame, and a BSS color value for the second BSS is set in a second BSS color field of the wireless frame.

### (Item 11)

The communication device according to item 10, characterized in that
the first BSS color field and the second BSS color field are included in a PHY preamble of the wireless frame.

### (Item 12)

The communication device according to item 10 or item 11, characterized in that
information indicating whether or not the communication device is operating jointly with another communication device to transmit the wireless frame is included in a PHY preamble of the wireless frame.

### (Item 13)

A communication device for carrying out communication in compliance with an IEEE 802.11 standard, the communication device characterized by comprising:
a first receiving means for receiving a wireless frame from a first other communication device that constructs a first Basic Service Set, BSS; and
a second receiving means for receiving a wireless frame from a second other communication device that constructs a second BSS, wherein
in a case of receiving a wireless frame transmitted jointly from the first communication device and the second communication device, a value different from a BSS color value for the first BSS and different from a BSS color value for a second BSS constructed by the second other communication device is set in a BSS color field of the jointly transmitted wireless frame.

### (Item 14)

The communication device according to item 13, characterized by comprising
a means for acquiring the value from the first other communication device and/or the second communication device in a case where the first other communication device operates jointly with the second other communication device to transmit the wireless frame.

### (Item 15)

The communication device according to item 14, characterized in that
the acquiring by the acquiring means is performed using at least one from among a Beacon frame, an Association Response frame, a Probe Response frame, and a Trigger frame.

### (Item 16)

A communication device for carrying out communication in compliance with an IEEE 802.11 standard, the communication device characterized by comprising:
a first receiving means for receiving a wireless frame from a first other communication device that constructs a first Basic Service Set, BSS; and
a second receiving means for receiving a wireless frame from a second other communication device that constructs a second BSS, wherein
in a case of receiving a wireless frame transmitted jointly from the first communication device and the second communication device, a BSS color value for the first BSS is set in a first BSS color field of the jointly transmitted wireless frame, and a BSS color value for the second BSS is set in a second BSS color field of the jointly transmitted wireless frame.

### (Item 17)

A communication method in a communication device for carrying out communication in compliance with an IEEE 802.11 standard, the communication method characterized by comprising:
a constructing step for constructing a first Basic Service Set, BSS; and
a transmitting step for operating jointly with a first other communication device to transmit a wireless frame to a second other communication device, wherein
in a case of operating jointly with the first other communication device to transmit a wireless frame to the second other communication device, a value different from a BSS color value for the first BSS and different from a BSS color value for a second BSS constructed by the second other communication device is set in a BSS color field of the wireless frame.

### (Item 18)

A communication method in a communication device for carrying out communication in compliance with an IEEE 802.11 standard, the communication method characterized by comprising:
a constructing step for constructing a first Basic Service Set, BSS; and
a transmitting step for operating jointly with a first other communication device to transmit a wireless frame to a second other communication device, wherein
in a case of operating jointly with the first other communication device to transmit a wireless frame to the second other communication device, a BSS color value for the first BSS is set in a first BSS color field of the wireless frame, and a BSS color value for the second BSS is set in a second BSS color field of the wireless frame.

### (Item 19)

A communication method in a communication device for carrying out communication in compliance with an IEEE 802.11 standard, the communication method characterized by comprising:
a first receiving step for receiving a wireless frame from a first other communication device that constructs a first Basic Service Set, BSS; and
a second receiving step for receiving a wireless frame from a second other communication device that constructs a second BSS, wherein
in a case of receiving a wireless frame transmitted jointly from the first communication device and the second communication device, a value different from a BSS color value for the first BSS and different from a BSS color value for a second BSS constructed by the second other communication device is set in a BSS color field of the jointly transmitted wireless frame.

### (Item 20)

A communication method in a communication device for carrying out communication in compliance with an IEEE 802.11 standard, the communication method characterized by comprising:
a first receiving step for receiving a wireless frame from a first other communication device that constructs a first Basic Service Set, BSS; and
a second receiving step for receiving a wireless frame from a second other communication device that constructs a second BSS, wherein
in a case of receiving a wireless frame transmitted jointly from the first communication device and the second communication device, a BSS color value for the first BSS is set in a first BSS color field of the jointly transmitted wireless frame, and a BSS color value for the second BSS is set in a second BSS color field of the jointly transmitted wireless frame.

### (Item 21)

A program for causing a computer to operate as the communication device according to any one of items 1 to 16.

The invention is not limited to the embodiments described above, and various changes and modifications are possible without departing from the spirit and scope of the invention. Accordingly, the claims are attached to make public the scope of the invention.

This application claims the benefit of Japanese Patent Application No. 2023-188039 filed on November 1, 2023, which is hereby incorporated by reference in its entirety.

## Claims

1. A communication device for carrying out communication in compliance with an IEEE 802.11 standard, the communication device **characterized by** comprising:
a constructing means for constructing a first Basic Service Set, BSS; and
a transmitting means for operating jointly with a first other communication device to transmit a wireless frame to a second other communication device, wherein
in a case of operating jointly with the first other communication device to transmit a wireless frame to the second other communication device, a value different from a BSS color value for the first BSS and different from a BSS color value for a second BSS constructed by the second other communication device is set in a BSS color field of the wireless frame.

2. The communication device according to claim 1, **characterized by** comprising
a notifying means for providing the value set in the BSS color field of the wireless frame to the first other communication device in a notification.

3. The communication device according to claim 2, **characterized in that**
the notifying by the notifying means is performed using a Trigger frame frame.

4. The communication device according to claim 3, **characterized in that**
the Trigger frame frame includes Padding information pertaining to a processing time until receiving the wireless frame.

5. The communication device according to claim 1, **characterized by** comprising
an acquiring means for acquiring the value set in the BSS color field of the wireless frame from the first other communication device.

6. The communication device according to claim 5, **characterized in that**
the acquiring by the acquiring means is performed using a Trigger frame frame.

7. The communication device according to claim 6, **characterized in that**
the Trigger frame frame includes Padding information pertaining to a processing time until transmitting or receiving the wireless frame.

8. The communication device according to claim 1, **characterized by** comprising
a notifying means for providing the value set in the BSS color field of the wireless frame to the second other communication device in a notification.

9. The communication device according to claim 8, **characterized in that**
the notifying by the notifying means is performed using at least one from among a Beacon frame, an Association Response frame, a Probe Response frame, and a Trigger frame.

10. A communication device for carrying out communication in compliance with an IEEE 802.11 standard, the communication device **characterized by** comprising:
a constructing means for constructing a first Basic Service Set, BSS; and
a transmitting means for operating jointly with a first other communication device to transmit a wireless frame to a second other communication device, wherein
in a case of operating jointly with the first other communication device to transmit a wireless frame to the second other communication device, a BSS color value for the first BSS is set in a first BSS color field of the wireless frame, and a BSS color value for the second BSS is set in a second BSS color field of the wireless frame.

11. The communication device according to claim 10, **characterized in that**
the first BSS color field and the second BSS color field are included in a PHY preamble of the wireless frame.

12. The communication device according to claim 10, **characterized in that**
information indicating whether or not the communication device is operating jointly with another communication device to transmit the wireless frame is included in a PHY preamble of the wireless frame.

13. A communication device for carrying out communication in compliance with an IEEE 802.11 standard, the communication device **characterized by** comprising:
a first receiving means for receiving a wireless frame from a first other communication device that constructs a first Basic Service Set, BSS; and
a second receiving means for receiving a wireless frame from a second other communication device that constructs a second BSS, wherein
in a case of receiving a wireless frame transmitted jointly from the first communication device and the second communication device, a value different from a BSS color value for the first BSS and different from a BSS color value for a second BSS constructed by the second other communication device is set in a BSS color field of the jointly transmitted wireless frame.

14. The communication device according to claim 13, **characterized by** comprising
a means for acquiring the value from the first other communication device and/or the second communication device in a case where the first other communication device operates jointly with the second other communication device to transmit the wireless frame.

15. The communication device according to claim 14, **characterized in that**
the acquiring by the acquiring means is performed using at least one from among a Beacon frame, an Association Response frame, a Probe Response frame, and a Trigger frame.

16. A communication device for carrying out communication in compliance with an IEEE 802.11 standard, the communication device **characterized by** comprising:
a first receiving means for receiving a wireless frame from a first other communication device that constructs a first Basic Service Set, BSS; and
a second receiving means for receiving a wireless frame from a second other communication device that constructs a second BSS, wherein
in a case of receiving a wireless frame transmitted jointly from the first communication device and the second communication device, a BSS color value for the first BSS is set in a first BSS color field of the jointly transmitted wireless frame, and a BSS color value for the second BSS is set in a second BSS color field of the jointly transmitted wireless frame.

17. A communication method in a communication device for carrying out communication in compliance with an IEEE 802.11 standard, the communication method **characterized by** comprising:
a constructing step for constructing a first Basic Service Set, BSS; and
a transmitting step for operating jointly with a first other communication device to transmit a wireless frame to a second other communication device, wherein
in a case of operating jointly with the first other communication device to transmit a wireless frame to the second other communication device, a value different from a BSS color value for the first BSS and different from a BSS color value for a second BSS constructed by the second other communication device is set in a BSS color field of the wireless frame.

18. A communication method in a communication device for carrying out communication in compliance with an IEEE 802.11 standard, the communication method **characterized by** comprising:
a constructing step for constructing a first Basic Service Set, BSS; and
a transmitting step for operating jointly with a first other communication device to transmit a wireless frame to a second other communication device, wherein
in a case of operating jointly with the first other communication device to transmit a wireless frame to the second other communication device, a BSS color value for the first BSS is set in a first BSS color field of the wireless frame, and a BSS color value for the second BSS is set in a second BSS color field of the wireless frame.

19. A communication method in a communication device for carrying out communication in compliance with an IEEE 802.11 standard, the communication method **characterized by** comprising:
a first receiving step for receiving a wireless frame from a first other communication device that constructs a first Basic Service Set, BSS; and
a second receiving step for receiving a wireless frame from a second other communication device that constructs a second BSS, wherein
in a case of receiving a wireless frame transmitted jointly from the first communication device and the second communication device, a value different from a BSS color value for the first BSS and different from a BSS color value for a second BSS constructed by the second other communication device is set in a BSS color field of the jointly transmitted wireless frame.

20. A communication method in a communication device for carrying out communication in compliance with an IEEE 802.11 standard, the communication method **characterized by** comprising:
a first receiving step for receiving a wireless frame from a first other communication device that constructs a first Basic Service Set, BSS; and
a second receiving step for receiving a wireless frame from a second other communication device that constructs a second BSS, wherein
in a case of receiving a wireless frame transmitted jointly from the first communication device and the second communication device, a BSS color value for the first BSS is set in a first BSS color field of the jointly transmitted wireless frame, and a BSS color value for the second BSS is set in a second BSS color field of the jointly transmitted wireless frame.

21. A program for causing a computer to operate as the communication device according to any one of claims 1 to 16.
